# EUROPÄISCHE PATENTSCHRIFT

(11) **EP 2 401 072 B1**
(45) Veröffentlichungstag und Bekanntmachung des Hinweises auf die Patenterteilung: **29.05.2013**
(21) Anmeldenummer: 10705368.8
(22) Anmeldetag: 25.02.2010
(51) Int. Cl.: B01J 23/46

(54) **KATALYSATOR FÜR DIE CHLORWASSERSTOFFOXIDATION ENTHALTEND RUTHENIUM UND SILBER UND/ODER CALCIUM**
CATALYST FOR HYDROGEN CHLORIDE OXIDATION COMPRISING RUTHENIUM AND SILVER AND/OR CALCIUM
CATALYSEUR POUR L'OXYDATION DE CHLORURE D'HYDROGÈNE CONTENANT DU RUTHÉNIUM ET DE L'ARGENT ET/OU DU CALCIUM

(30) Priorität: 26.02.2009 EP 09153716
(43) Veröffentlichungstag der Anmeldung: 04.01.2012
(73) Patentinhaber: BASF SE, 67056 Ludwigshafen (DE)
(72) Erfinder: HENZE, Guido, 68642 Bürstadt (DE); URTEL, Heiko, 67227 Frankenthal (DE); SESING, Martin, 67165 Waldsee (DE); KARCHES, Martin, 67434 Neustadt (DE)
(86) Internationale Anmeldenummer: PCT/EP2010/052378
(87) Internationale Veröffentlichungsnummer: WO 2010/097424

(56) Entgegenhaltungen:
- DE-A1-102005 008 612

## Beschreibung

Die Erfindung betrifft einen Katalysator für die katalytische Oxidation von Chlorwasserstoff mit Sauerstoff zu Chlor sowie ein Verfahren zur katalytischen Oxidation von Chlorwasserstoff unter Verwendung des Katalysators.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der Isocyanatherstellung, als Koppelprodukt an.

In EP-A 0 743 277 ist ein Verfahren zur Herstellung von Chlor durch katalytische Chlorwasserstoff-Oxidation offenbart, bei dem ein Ruthenium enthaltender Trägerkatalysator eingesetzt wird. Ruthenium wird dabei in Form von Rutheniumchlorid, Rutheniumoxichloriden, Chlorruthenat-Komplexen, Rutheniumhydroxid, Ruthenium-Amin-Komplexen oder in Form weiterer Ruthenium-Komplexe auf den Träger aufgebracht. Der Katalysator kann als weitere Metalle Palladium, Kupfer, Chrom, Vanadium, Mangan, Alkali-, Erdalkali- und Seltenerdmetalle enthalten.

Gemäß GB 1,046,313 wird in einem Verfahren der katalytischen Chlorwasserstoff-Oxidation als Katalysator Ruthenium(III)chlorid auf Aluminiumoxid eingesetzt.

DE 10 2005 040286 A1 offenbart einen mechanisch stabilen Katalysator für die Chlorwasserstoffoxidation, enthaltend auf alpha-Aluminiumoxid als Träger
a) 0,001 bis 10 Gew.-% Ruthenium, Kupfer und/oder Gold,
b) 0 bis 5 Gew.-% eines oder mehrerer Erdalkalimetalle,
c) 0 bis 5 Gew.-% eines oder mehrerer Alkalimetalle,
d) 0 bis 10 Gew.-% eines oder mehrerer Seltenerdmetalle,
e) 0 bis 10 Gew.-% eines oder mehrerer weiterer Metalle, ausgewählt aus der Gruppe bestehend aus Palladium, Platin, Osmium, Iridium, Silber und Rhenium.

Als zur Dotierung geeignete Promotoren werden Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische, ferner Titan, Mangan, Molybdän und Zinn genannt.

Die Katalysatoren des Standes der Technik sind hinsichtlich ihrer katalytischen Aktivität und Langzeitstabilität noch verbesserungsfähig. Insbesondere nach längerer Betriebsdauer von mehreren 100 h nimmt die Aktivität der bekannten Katalysatoren deutlich ab.

Aufgabe der vorliegenden Erfindung ist es, Katalysatoren für die katalytische Chlorwasserstoff-Oxidation mit verbesserter katalytischer Aktivität und Langzeitstabilität bereitzustellen.

Gelöst wird die Aufgabe durch einen Katalysator für die katalytische Oxidation von Chlorwasserstoff mit Sauerstoff zu Chlor enthaltend Ruthenium und Silber oder Calcium auf einem Träger, dadurch gekennzeichnet, dass der Katalysator 1,0 bis 2,0 Gew.-% Ruthenium und 0,2 bis 1,0 Gew.-% Silber oder 0,5 bis 1,0 Gew.-% Calcium auf alpha-Aluminiumoxid als Träger und daneben keine weiteren Aktivmetalle und Promotormetalle, wobei Ruthenium als RuO₂ vorliegt, enthält.

Es wurde gefunden, dass ein mit mindestens einem der Metalle aus der Gruppe bestehend aus Silber und Calcium dotierter Ruthenium enthaltender Katalysator eine höhere Aktivität als ein Katalysator ohne Silber und Calcium aufweist. Es wird vermutet, dass diese Aktivitätssteigerung zum einen auf die promotierenden Eigenschaften von Silberchlorid und Calciumchlorid als auch durch eine durch Silberchlorid und Calciumchlorid bewirkte bessere Dispersität der Aktivkomponente auf der Oberfläche des Katalysators zurückzuführen ist. So liegt Ruthenium auf dem erfindungsgemäßen Katalysator in frischer oder regenerierter Form als RuO₂-Kristallite mit einer Kristallitgröße < 7 nm vor. Die Kristallitgröße wird über die Halbwertsbreite des Reflexes der Spezies bei der XRD-Messung bestimmt. Es wird vermutet, dass Silber und Calcium als Sinterbarriere dienen und somit das Kristallitwachstum der RuO₂-Kristallite verhindern.

Der Silbergehalt des dotierten Wirbelschichtkatalysators beträgt nicht mehr 1,0 Gew.-%, da AgCl zu Brückenbildung neigt und die Partikel des Wirbelschichtkatalysators verkleben können.

Im Allgemeinen wird der erfindungsgemäße Katalysator zur Durchführung von Gasphasen-Reaktionen bei einer Temperatur von oberhalb 200 °C, bevorzugt oberhalb 320 °C, besonders bevorzugt oberhalb 350 °C eingesetzt. Die Reaktionstemperatur beträgt dabei aber im Allgemeinen nicht mehr als 600 °C, vorzugsweise nicht mehr als 500 °C.

In einer Ausführungsform enthält der erfindungsgemäße Katalysator ca. 1,0 bis 2,0 Gew.-% Ruthenium und 0,2 bis 1,0 Gew.-% Silber auf alpha-Aluminiumoxid als Träger und daneben keine weiteren Aktivmetalle und Promotormetalle, wobei Ruthenium als RuO₂ vorliegt. In einer weiteren Ausführungsform enthält der erfindungsgemäße Katalysator ca. 1,0 bis 2,0 Gew.-% Ruthenium und 0,5 bis 1,0 Gew.-% Calcium auf alpha-Aluminiumoxid als Träger und daneben keine weiteren Aktivmetalle und Promotormetalle, wobei Ruthenium als RuO₂ vorliegt.

Die erfindungsgemäßen Katalysatoren werden durch Tränkung des Trägermaterials mit wässrigen Lösungen von Salzen der Metalle erhalten. Die Metalle werden üblicher Weise als wässrige Lösungen ihrer Chloride, Oxichloride oder Oxide auf den Träger aufgebracht. Silber wird vorzugsweise in Form einer wässrigen Silbernitratlösung, Calcium vorzugsweise in Form einer wässrigen Calciumchloridlösung aufgebracht. Die Formgebung des Katalysators kann nach oder bevorzugt vor der Tränkung des Trägermaterials erfolgen. Die erfindungsgemäßen Katalysatoren werden auch als Wirbelschichtkatalysatoren in Form von Pulver mit einer mittleren Teilchengröße von 10 - 200 µm eingesetzt. Als Festbettkatalysatoren werden sie im Allgemeinen in Form von Katalysatorformkörpern eingesetzt.

Die Rutheniumträgerkatalysatoren können beispielsweise durch Tränkung des Trägermaterials mit wässrigen Lösungen von RuCl₃ und AgNO₃ oder CaCl₂ und gegebenenfalls der weiteren Promotoren zur Dotierung, bevorzugt in Form ihrer Chloride, erhalten werden. Die Formgebung des Katalysators kann nach oder bevorzugt vor der Tränkung des Trägermaterials erfolgen.

Die Formkörper oder Pulver können anschließend bei Temperaturen von 100 bis 400 °C, bevorzugt 100 bis 300 °C beispielsweise unter einer Stickstoff-, Argon- oder Luftatmosphäre getrocknet und gegebenenfalls calciniert werden. Bevorzugt werden die Formkörper oder Pulver zunächst bei 100 bis 150 °C getrocknet und anschließend bei 200 bis 400 °C calciniert.

Gegenstand der Erfindung ist auch ein Verfahren zur Herstellung von Katalysatoren durch Imprägnieren der Trägermaterialien mit einer oder mehreren Metallsalzlösungen, welche das oder die Aktivmetalle und gegebenenfalls ein- oder mehrere Promotormetalle enthalten, Trocknen und Calcinieren des imprägnierten Trägers. Die Formgebung zu geformten Katalysatorpartikeln kann vor oder nach dem Imprägnieren erfolgen. Der erfindungsgemäße Katalysator kann auch in Pulverform eingesetzt werden.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Die spezifische Oberfläche des besonders bevorzugten alpha-Aluminiumoxidträgers vor der Metallsalz-Ablagerung liegt im Allgemeinen im Bereich von 0,1 bis 10 m²/g. alpha-Aluminiumoxid kann durch Erhitzen von gamma-Aluminiumoxid auf Temperaturen oberhalb von 1000 °C hergestellt werden, vorzugsweise wird es so hergestellt. Im Allgemeinen wird 2 bis 24 h lang calciniert.

Gegenstand der vorliegenden Erfindung ist auch ein Verfahren zur katalytischen Oxidation von Chlorwasserstoff mit Sauerstoff zu Chlor an dem erfindungsgemäßen Katalysator.

Dazu werden ein Chlorwasserstoffstrom und ein Sauerstoff enthaltender Strom in eine Oxidationszone eingespeist und wird Chlorwasserstoff in Gegenwart des Katalysators teilweise zu Chlor oxidiert, wobei ein Produktgasstrom erhalten wird, der Chlor, nicht umgesetzten Sauerstoff, nicht umgesetzten Chlorwasserstoff und Wasserdampf enthält. Der Chlorwasserstoffstrom, der aus einer Anlage zur Herstellung von Isocyanaten stammen kann, kann Verunreinigungen wie Phosgen und Kohlenmonoxid enthalten.

Übliche Reaktionstemperaturen liegen zwischen 150 und 500 °C, übliche Reaktionsdrücke liegen zwischen 1 und 25 bar, beispielsweise 4 bar. Bevorzugt beträgt die Reaktionstemperatur > 300 °C, besonders bevorzugt liegt sie zwischen 350 °C und 450 °C. Ferner ist es zweckmäßig, Sauerstoff in überstöchiometrischen Mengen einzusetzen. Üblich ist beispielsweise ein 1,5- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Übliche Reaktionsapparate, in denen die erfindungsgemäße katalytische Chlorsserstoff-Oxidation durchgeführt wird, sind Festbett- oder Wirbelbettreaktoren. Die Chlorwasserstoff-Oxidation kann ein- oder mehrstufig durchgeführt werden.

Die Katalysatorschüttung bzw. das Katalysator-Wirbelbett kann neben dem erfindungsgemäßen Katalysator weitere geeignete Katalysatoren oder zusätzliches Inertmaterial enthalten.

Die katalytische Chlorwasserstoff-Oxidation kann adiabat oder bevorzugt isotherm oder annähernd isotherm, diskontinuierlich, bevorzugt kontinuierlich als Fließ- oder Festbettverfahren, bevorzugt als Festbettverfahren, besonders bevorzugt in Rohrbündelreaktoren bei Reaktortemperaturen von 200 bis 500 °C, vorzugsweise 300 bis 400 °C, und einem Druck von 1 bis 25 bar, vorzugsweise 1 bis 5 bar, durchgeführt werden.

Bei der isothermen oder annähernd isothermen Fahrweise können auch mehrere, beispielsweise 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform des Festbettverfahrens besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung des Katalysatorträgers mit Aktivmasse oder durch unterschiedliche Verdünnung der Katalysatorschüttung mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Das Inertmaterial hat bevorzugt ähnliche äußere Abmessungen wie die Katalysatorformkörper.

Der Umsatz an Chlorwasserstoff im einfachen Durchgang kann auf 15 bis 90 %, bevorzugt 40 bis 85 % begrenzt werden. Nicht umgesetzter Chlorwasserstoff kann nach der Abtrennung teilweise oder vollständig in die katalytische Chlorwasserstoff-Oxidation zurückgeführt werden. Das Volumenverhältnis von Chlorwasserstoff zu Sauerstoff am Reaktoreintritt liegt in der Regel zwischen 1:1 und 20:1, bevorzugt zwischen 1,5:1 und 8:1, besonders bevorzugt zwischen 1,5:1 und 5:1.

Aus dem bei der katalytischen Chlorwasserstoff-Oxidation erhaltenen Produktgasstrom kann nachfolgend in üblicher Weise das gebildete Chlor abgetrennt werden. Die Abtrennung umfasst üblicher Weise mehrere Stufen, nämlich die Abtrennung und gegebenenfalls Rückführung von nicht umgesetztem Chlorwasserstoff aus dem Produktgasstrom der katalytischen Chlorwasserstoff-Oxidation, die Trocknung des erhaltenen, im Wesentlichen aus Chlor und Sauerstoff bestehenden Restgasstroms sowie die Abtrennung von Chlor aus dem getrockneten Strom.

Ein gebrauchter, Ruthenium enthaltender Chlorwasserstoff-Oxidationskatalysator lässt sich regenerieren durch:
a) Reduzieren des Katalysators in einem Gasstrom enthaltend Chlorwasserstoff und gegebenenfalls ein Inertgas bei einer Temperatur von 300 bis 500 °C,
b) Recalcinieren des Katalysators in einem Sauerstoff enthaltenden Gasstrom bei einer Temperatur von 200 bis 450 °C.

Es wurde gefunden, dass sich RuO₂ mit Chlorwasserstoff reduzieren lässt. Es wird angenommen, dass die Reduktion über RuCl₃ bis zum elementaren Ruthenium erfolgt. Behandelt man also einen teilweise deaktivierten rutheniumoxidhaltigen Katalysator mit Chlorwasserstoff, so wird vermutlich nach einer ausreichend langen Behandlungszeit Rutheniumoxid quantitativ zu Ruthenium und/oder Rutheniumchlorid reduziert. Durch diese Reduktion werden die RuO₂-Kristallite zerstört und wird das Ruthenium, welches als elementares Ruthenium, als Gemisch aus Rutheniumchlorid und elementarem Ruthenium, oder als Rutheniumchlorid vorliegen kann, auf dem Träger redispergiert. Nach der Reduktion lässt sich das elementare Ruthenium wieder mit einem sauerstoffhaltigen Gas, beispielsweise mit Luft, zum katalytisch aktiven RuO₂ reoxidieren. Es wurde gefunden, dass der so erhaltene Katalysator wieder annähernd die Aktivität des frischen Katalysators aufweist. Ein Vorteil des Verfahrens liegt darin, dass der Katalysator *in situ* im Reaktor regeneriert werden kann und nicht ausgebaut werden muss.

Die Erfindung wird durch die nachstehenden Beispiele näher erläutert.

### Beispiele

### Beispiel 1

### Vergleichskatalysator ohne Dotierung

100 g α-Al₂O₃ (Pulver, mittlerer Durchmesser d = 50 µm) werden mit 36 mL einer wässrigen Rutheniumchloridlösung (4,2 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 2

### Katalysator mit Silberdotierung

700 g α-Al₂O₃ (Pulver, d = 50 µm) werden mit 252 mL einer wässrigen Lösung enthaltend Silbernitrat (1,4 gew.-%ig bezüglich Ag) im drehenden Glaskolben besprüht. Der resultierende feuchte Feststoff wird für 16 h bei 120 °C getrocknet und anschließend unter Luft für 5 h bei 380 °C calciniert. Der so erhaltene Feststoff wird mit 252 mL einer Rutheniumchloridlösung (4,2 gew.-%ig bezüglich Ru) im drehenden Glaskolben besprüht. Der resultierende feuchte Feststoff wird zunächst für 16 h bei 120 °C getrocknet und anschließend für 2 h unter Luft bei 380 °C calciniert. Wird der Katalysator mit AgNO₃ dotiert und anschließend unter Bildung von Ag₂O calciniert, so bildet sich durch die anschließende Tränkung mit Rutheniumchlorid und/oder unter Reaktionsbedingungen AgCl, welches zur Stabilisierung des Katalysators führt. Der fertige Katalysator enthält 1,5 Gew.-% Ruthenium und 0,5 Gew.-% Silber als Dotierung.

### Beispiel 3

### Katalysator mit Calciumdotierung

50 g *α*-Al₂O₃ (Pulver, d = 50 µm) werden mit 18 mL einer wässrigen Lösung aus Rutheniumchlorid (4,2 % bezogen auf Ruthenium) und Calciumchlorid (2,1 % bezogen auf Calcium) im drehenden Glaskolben getränkt. Der feuchte Feststoff wird 16 h bei 120 °C getrocknet. Der daraus resultierende trockene Feststoff wird für 2 h bei 380 °C unter Luft calciniert. Der fertige Katalysator enthält 1,5 Gew.-% Ruthenium und 0,75 Gew.-% Calcium als Dotierung.

### Beispiel 4

Die gemäß Beispielen 1 bis 3 hergestellten Katalysatoren wurden bezüglich ihrer Aktivität und ihrer Langzeitstabilität untersucht:

600 g der gemäß den Beispielen 1 bis 3 hergestellten Katalysatoren werden in einem Wirbelbettreaktor mit einem Durchmesser von 44 mm, einer Höhe von 990 mm und einer Betthöhe von 300 bis 350 mm bei Temperaturen zwischen 360 und 380 °C mit 200 NL·h⁻¹ HCl und 100 NL·h⁻¹ O₂ betrieben.

Nach bestimmten Laufzeiten werden Katalysatorproben entnommen. Diese werden bezüglich Umsatz und Aktivität wie folgt untersucht:

Jeweils 5 g der entnommenen Katalysatorproben gemäß den Beispielen 1 bis 3 werden mit 115 g des entsprechenden Trägermaterials als Inertmaterial gemischt und werden in einem Wirbelschichtreaktor (d = 29 mm; Höhe des Wirbelbettes 20 bis 25 cm) bei 360 °C mit 7,0 NUh HCl und 3,5 NL/h O₂ von unten über eine Glasfritte durchströmt. Der HCl-Umsatz wird durch Einleiten des resultierenden Gasstromes in eine Kaliumiodidlösung und anschließender Titration des entstandenen lods mit einer Natriumthiosulfatlösung bestimmt. Der mit dem Katalysator gemäß Beispiel 1 enthaltend 2,0 Gew.-% RuO₂ auf *α*-Al₂O₃ erzielte HCl-Umsatz beträgt 49,7 % nach 675 Betriebsstunden und wird zu Vergleichszwecken einer Aktivität von 1,0 zugeordnet.

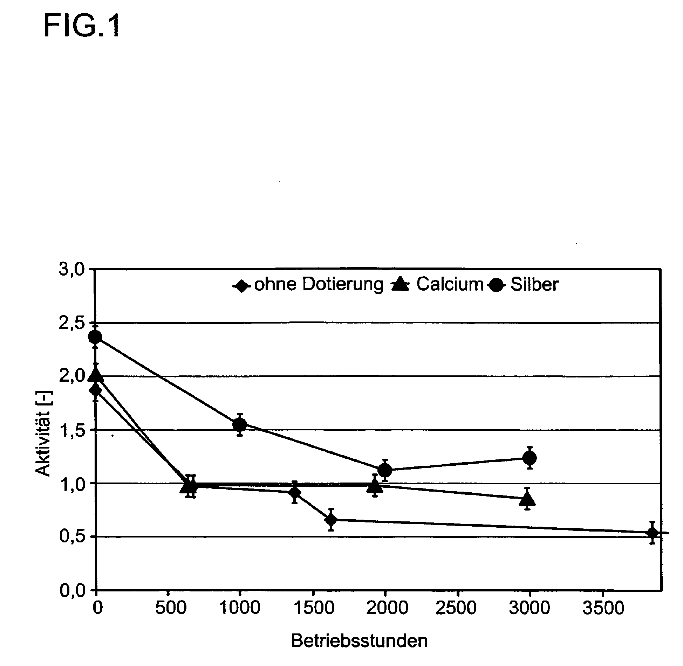

Die Ergebnisse sind in Figur 1 wiedergegeben. Darin wird die Aktivität (in a. u.) gegen die Betriebsdauer (in h) für die Katalysatoren gemäß Beispiel 1 (nicht dotiert, Rauten), Beispiel 2 (Ag-Dotierung, Dreiecke) und Beispiel 3 (Ca-Dotierung, Kreise) aufgetragen. Im Falle der Silberdotierung wird sowohl die Anfangsaktivität (durch die promotierenden Eigenschaften von Silber) als auch die Langzeitstabilität des Katalysators verbessert (das heißt die Aktivität fällt mit zunehmender Betriebsdauer weniger stark ab als bei einem undotierten Katalysator). Im Falle der Calciumdotierung ist die Anfangsaktivität des Katalysators gegenüber dem undotierten Katalysator nahezu unverändert, während die Langzeitstabilität verbessert ist.

## Patentansprüche

1. Katalysator für die katalytische Oxidation von Chlorwasserstoff mit Sauerstoff zu Chlor enthaltend Ruthenium und Silber oder Calcium auf einem Träger, **dadurch gekennzeichnet, dass** der Katalysator ca. 1,0 bis 2,0 Gew.-% Ruthenium und 0,2 bis 1,0 Gew.-% Silber oder 0,5 bis 1,0 Gew.-% Calcium auf alpha-Aluminiumoxid als Träger und daneben keine weiteren Aktivmetalle und Promotermetalle, wobei Ruthenium als RuO₂ vorliegt, enthält.

2. Katalysator gemäß Anspruch 1, **dadurch gekennzeichnet, dass** die spezifische Oberfläche des alpha-Aluminiumoxidträgers vor der Metallsalz-Ablagerung im Allgemeinen im Bereich von 0,1 bis 10 m²/g liegt.

3. Verfahren zur katalytischen Oxidation von Chlorwasserstoff mit Sauerstoff zu Chlor an einem Katalysatorbett enthaltend Katalysatorpartikel aus dem Katalysator gemäß Anspruch 1 oder 2.

4. Verfahren nach Anspruch 3, **dadurch gekennzeichnet, dass** das Katalysatorbett ein Festbett oder ein Wirbelbett ist.

## Claims

1. A catalyst comprising ruthenium and silver or calcium on a support for the catalytic oxidation of hydrogen chloride by means of oxygen to form chlorine, wherein the catalyst comprises from about 1.0 to 2.0% by weight of ruthenium and from 0.2 to 1.0% by weight of silver or from 0.5 to 1.0% by weight of calcium on alpha-aluminum oxide as support and no further active metals and promoter metals, with ruthenium being present as RuO₂.

2. The catalyst according to claim 1, wherein the specific surface area of the alpha-aluminum oxide support prior to the deposition of metal salt is generally in the range from 0.1 to 10 m²/g.

3. A process for the catalytic oxidation of hydrogen chloride by means of oxygen to form chlorine over a catalyst bed comprising catalyst particles of the catalyst according to claim 1 or 2.

4. The process according to claim 3, wherein the catalyst bed is a fixed bed or a fluidized bed.

## Revendications

1. Catalyseur pour l'oxydation catalytique du chlorure d'hydrogène avec de l'oxygène en chlore, contenant du ruthénium et de l'argent ou du calcium sur un support, **caractérisé en ce que** le catalyseur contient environ 1,0 à 2,0 % en poids de ruthénium et 0,2 à 1,0 % en poids d' argent ou 0,5 à 1,0 % en poids de calcium sur de l'oxyde d'aluminium-alpha en tant que support et en outre ne contient pas d'autres métaux actifs et métaux promoteurs, le ruthénium se trouvant sous forme de RuO₂.

2. Catalyseur selon la revendication 1, **caractérisé en ce que** la surface spécifique du support oxyde d'aluminium-alpha, avant le dépôt de sels métalliques, se situe en général dans la plage de 0,1 à 10 m²/g.

3. Procédé pour l'oxydation catalytique du chlorure d'hydrogène avec de l'oxygène en chlore sur un lit de catalyseur contenant des particules de catalyseur à base du catalyseur selon la revendication 1 ou 2.

4. Procédé selon la revendication 3, **caractérisé en ce que** le lit de catalyseur est un lit fixe ou un lit fluidisé.
